# EUROPÄISCHE PATENTSCHRIFT

(11) **EP 2 907 691 B1**
(45) Veröffentlichungstag und Bekanntmachung des Hinweises auf die Patenterteilung: **08.04.2020**
(21) Anmeldenummer: 15154852.6
(22) Anmeldetag: 12.02.2015
(51) Int. Cl.: B60N 2/14, B60N 2/22, F16H 13/08

(54) **Dreheinheit für einen Fahrzeugsitz sowie Fahrzeugsitzgestell mit einer Dreheinheit und Fahrzeugsitz mit einer Dreheinheit**
Rotating unit for an automobile seat and vehicle seat frame with a rotary unit and vehicle seat having a rotary unit
Unité rotative pour un siège de véhicule et cadre de siège de véhicule doté d'une unité rotative et siège de véhicule doté d'une unité rotative

(30) Priorität: 18.02.2014 DE 102014002057
(43) Veröffentlichungstag der Anmeldung: 19.08.2015
(73) Patentinhaber: AGUTI PRODUKTENTWICKLUNG & DESIGN GMBH, 88085 Langenargen (DE)
(72) Erfinder: Grieger, Andreas, 88079 Kressbronn (DE); Grieger, Michael, 88079 Kressbronn (DE)
(74) Vertreter: Otten, Roth, Dobler & Partner mbB Patentanwälte

(56) Entgegenhaltungen:
- EP-A1- 0 515 275
- DE-A1- 4 309 894
- DE-U1-202004 015 902
- FR-A- 1 604 164

## Beschreibung

Die Erfindung betrifft eine Dreheinheit sowie ein Fahrzeugsitzgestell mit einer Dreheinheit bzw. einem Fahrzeugsitz mit einer Dreheinheit.

### Stand der Technik

Dreheinheiten der einleitend bezeichneten Art sind für Sitze von Kraftfahrzeugen in unterschiedlichen Ausführungsformen bereits bekannt geworden.

In Reisemobilen werden z. B. Fahrzeugsitze eingesetzt, die sich drehen lassen, um den Fahrzeugsitz bei Stillstand des Fahrzeugs in einer anderen Position nutzen zu können. Trotz einer Drehbarkeit des Sitzes ist es erforderlich, dass der Fahrzeugsitz die notwendige Stabilität erfüllt.

### Aufgabe und Vorteile der Erfindung

Der Erfindung liegt die Aufgabe zugrunde, eine Dreheinheit für einen Fahrzeugsitz bereitzustellen, die eine vergleichsweise höhere Stabilität aufweist.

Diese Aufgabe wird durch die Merkmale des Anspruchs 1 gelöst.

In den abhängigen Ansprüchen sind vorteilhafte und zweckmäßige Weiterbildungen der Erfindung angegeben.

Die Erfindung geht von einer Dreheinheit für einen Fahrzeugsitz aus, die aus einem in Einbaulage unten liegenden ersten Flanschelement und einem auf dem unten liegenden Flanschelement drehbar angeordneten zweiten Flanschelement besteht, wobei zwischen dem ersten und zweiten Flanschelement eine erste und zweite kreisförmige Wälzkörperanordnung mit Wälzkörperbahnen, insbesondere Kugellagerbahnen mit unterschiedlichen Bahndurchmessern, vorgesehen ist, um die Flanschelement zueinander drehbar zu lagern.

Die Erfindung liegt nun darin, dass eine erste radial außen liegende Wälzkörperbahn, insbesondere Kugellagerbahn, dadurch definiert ist, dass ein Flanschelement das andere Flanschelement um dessen äußeren Rand umgreift und überdeckt, sodass in einem Überdeckungsbereich die Wälzkörperbahn entsteht.

Diese Vorgehensweise hat den Vorteil, dass eine außen geschlossene Dreheinheit entsteht, bei welcher sich die Flanschelemente in einem äußeren Randbereich gegeneinander abstützen. Dadurch können die Flanschelemente bei Belastung im Randbereich nicht auseinandergehebelt werden und klaffen gegebenenfalls nicht auf, sondern bilden eine kompakte, am radial äußeren Rand geschlossene Dreheinheit.

In einer außerdem bevorzugten Ausgestaltung der Erfindung ist zur Ausbildung der ersten Wälzkörperbahn im ersten und/oder zweiten Flanschelement eine kreisförmige Rille ausgebildet. Beispielsweise ist in dem Umgreifungsabschnitt des einen Flanschelements eine Rille vorgesehen, sodass darin gelagerte Wälzkörper, z. B. Kugeln, sich eindeutig lediglich entlang der Rille bewegen können. Vorzugsweise ist jedoch in beiden Flanschelementen im Überdeckungsbereich eine Rille ausgestaltet, sodass die darin laufenden Wälzkörper, z. B. Kugeln, seitlich nicht nur an einem Flanschelement, sondern an beiden Flanschelementen abgestützt sind.

Außerdem bevorzugt ist es, wenn eine zweite radial innen liegende Wälzkörperbahn zwischen den Flanschelementen ausgebildet ist, wobei die Flanschelemente sich in diesem Bereich überdecken.

In diesem Zusammenhang ist es ebenso bevorzugt, wenn zumindest an einem Flanschelement zur Ausbildung der Wälzkörperbahn eine Rille vorgesehen ist. Um eine verbesserte, seitliche Führung, insbesondere von Kugeln zu erreichen, ist es vorteilhaft, wenn in beiden Flanschelementen kreisförmige Rillen vorgesehen sind, die der Führung der Kugeln dienen.

In einer weiteren bevorzugten Ausführungsform der Erfindung ist die erste außen liegende Wälzkörperbahn, insbesondere Kugelbahn, auf dem zweiten Flanschelement ausgebildet, wobei das erste unten liegende Flanschelement das zweite Flanschelement im Bereich der ersten Wälzkörperbahn umgreift und überdeckt. Dies stellt eine konkrete Ausführungsform der Dreheinheit dar, bei welcher ein Umgreifen von unten nach oben am äußeren Rand des oberen Flanschelements erfolgt. Diese Anordnung kann jedoch genauso um 180° gewendet, also sozusagen auf dem Kopf stehend, eingesetzt werden, womit von oben nach unten umgriffen wird.

Um eine rationelle Fertigung der Dreheinheit zu erreichen, wird im Weiteren vorgeschlagen, dass das Flanschelement, welches das andere Flanschelement an dessen äußerem radialen Rand umgreift, mehrteilig, insbesondere zweiteilig ist. Insbesondere weist das Flanschelement, welches das andere Flanschelement an dessen radial äußerem Rand umgreift, ein separates, insbesondere ringförmiges, das andere Flanschelement umgreifendes Bauteil auf, das mit dem verbleibenden Flanschelement, also dem Flanschelement, welches nicht umgriffen wird, fest verbunden ist. Dadurch wird eine rationelle Herstellung der ineinandergreifenden Flanschelemente möglich. Denn vorzugsweise wird das umgreifende Bauteil erst ganz zum Schluss, wenn alle Bauteile zueinander bereits positioniert sind, angebracht und mit dem verbleibenden Flanschelement fest verbunden.

In einer bevorzugten Ausführungsform kann das Verbinden dadurch entstehen, dass das umgreifende Bauteil in das verbleibende Flanschelement eingesteckt wird, sodass in Einstecköffnungen des verbleibenden Flanschelements Abschnitte des umgreifenden Bauteils überstehen. Diese Abschnitte können z. B. durch Verrollung aufgeweitet werden. Bei diesem Vorgang wird der überstehende Anteil durch ein Rollelement aufgeweitet, das auf den überstehenden Anteil drückt. Damit lässt sich ein Einsteckabschnitt aus der Einstecköffnung nicht mehr herausziehen, sondern bildet mit dem verbleibenden Flanschelement eine kompakt verbundene Einheit. Eine Verbindung des umgreifenden Bauteils mit dem verbleibenden Flanschelement kann jedoch auch durch andere Maßnahmen erfolgen, z. B. durch Schweißen, insbesondere Punktschweißen, oder durch zusätzliche Verbindungsmittel, wie Nieten oder Schrauben. Eine Verrollung stellt jedoch eine besonders effektive rationelle Verbindungsart dar, zwischen dem umgreifenden Bauteil und dem verbleibenden Flanschelement eine stabile Verbindung herzustellen.

Vorzugsweise sind die Flanschelemente aus Blechmaterial gefertigt, wobei Konturen durch Blechumformung eingebracht werden, insbesondere Rillen, die die Kugellagerbahnen für Kugeln bilden.

Zwischen den umgeformten Blechabschnitten der Flanschelemente befinden sich dann die Wälzkörper, insbesondere Kugeln, wie in einem Art Sandwich zwischen gegenüberliegenden umgeformten Blechelementabschnitten.

Ein Ausführungsbeispiel der Erfindung ist in den Zeichnungen nachstehend unter Angabe weiterer Vorteile und Einzelheiten näher beschrieben.

Es zeigen
- Figur 1a bis 1c: in Untersicht und Seitenansicht sowie in einer perspektivischen Ansicht eine erfindungsgemäße Dreheinheit,
- Figur 2: einen Schnitt durch die Dreheinheit gemäß Figur 1a entlang der Schnittlinie A-A und
- Figur 3: eine vergrößerte Ansicht des Ausschnitts A aus Figur 2.

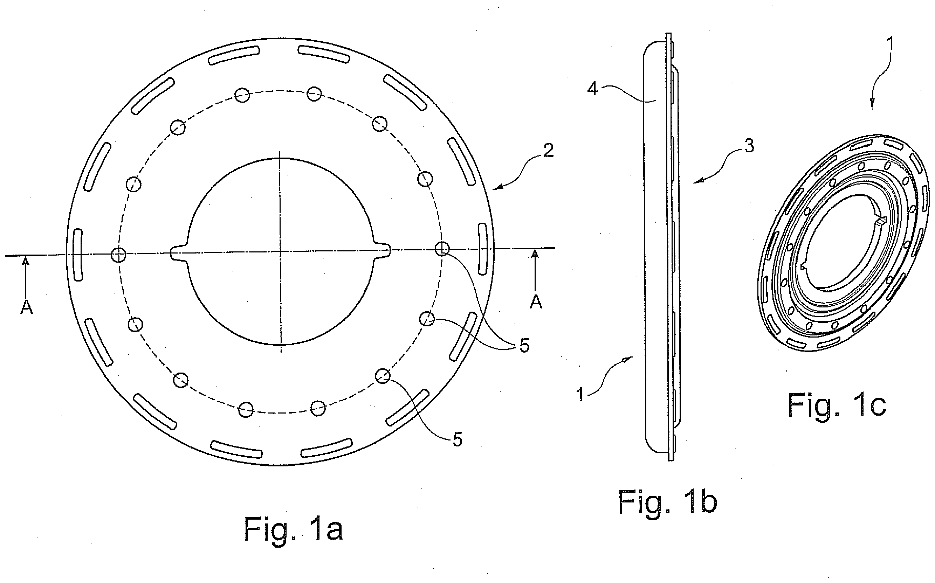

In den Figuren 1a bis 1c ist eine Dreheinheit 1 abgebildet, die am äußeren Rand zwei zwischen einem oberen Flansch (nicht zu sehen) und einem unteren Flansch 3 an einer Umfangswand 4 vollständig geschlossen ist.

Radial innen liegend ist eine Reihe von Bohrungen 5 auf einer Kreislinie angeordnet, über welche die Dreheinheit 1 über zum Beispiel darin angeordnete Befestigungsbolzen mit einer weiteren Konstruktion, z. B. einer Unterkonstruktion verbunden werden kann.

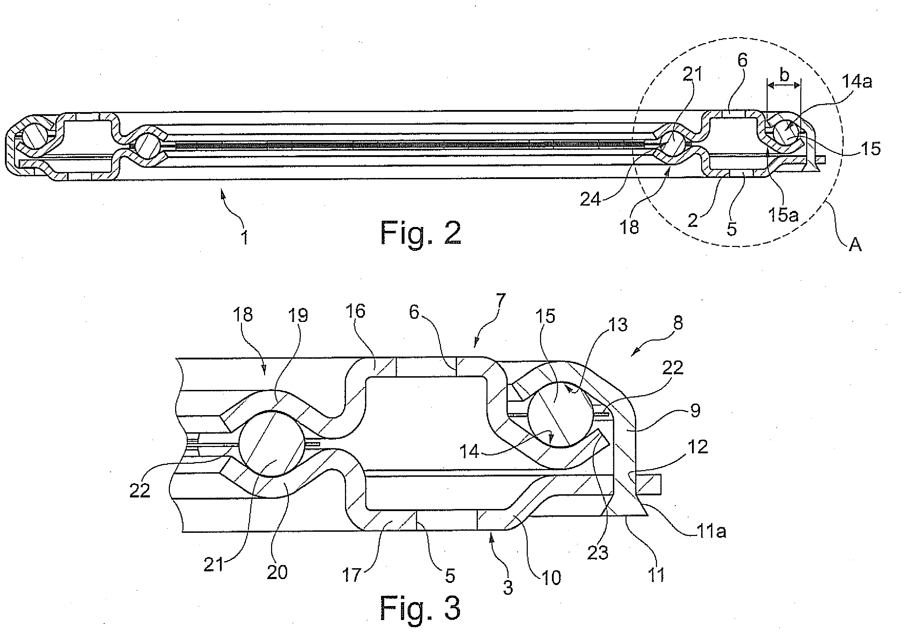

Der innere Aufbau der Dreheinheit 1 wird aus den Schnittansichten gemäß Figur 2 und 3 ersichtlich.

Der untere Flansch 3 umgreift den oberen Flansch 7 in einem äußeren Bereich 8 mit einem Umgreifungselement 9. Der untere Flansch 3 ist zweiteilig und besteht aus dem Umgreifungselement 9, das mit einer Flanschgrundplatte 10 verbunden ist.

Die Verbindung erfolgt derart, dass Einstecklaschen 11 des Umgreifungselements 9 in Einstecköffnungen 12 der Flanschgrundplatte 10 eingesteckt sind, und dann überstehende Bereiche der Einstecklaschen 11 durch eine sogenannte Verrollung aufgeweitet werden, und dabei die Einstecklaschen 11 sich in den Einstecköffnungen 12 verkeilen und gegebenenfalls das Umgreifungselement 9 an die Flanschgrundplatte 10 herangezogen wird.

Das Umgreifungselement 9 mit Einstecklaschen 11 ist kreisringförmig und/oder eine kreisringförmige umlaufende Rille 13, die zu einer axial gegenüberliegenden Rille 14 passt, die am radial äußeren Rand des oberen Flansches 7 ausgebildet ist.

Die Rillen 13 und 14 definieren eine Kugellagerbahn 14a für Kugeln 15 einer radial außen liegenden Kugellageranordnung 15a.

Radial innen liegend nach Befestigungsabschnitten 16 und 17 mit Bohrungen 5 und 6 des unteren Flansches 3 bzw. oberen Flansches 7 ist eine weitere Kugellageranordnung 18 ausgebildet, aus jeweils Rillen 19 bzw. 20 im oberen Flansch 7 bzw. im unteren Flansch 3, die eine Kugellagerbahn 24 für Kugeln 21 bilden.

Die Kugeln 15 der radial außen liegenden Kugellageranordnung 15a sowie die Kugeln der Kugellageranordnung 18 sind in einem Kugellagerkäfig 22 angeordnet, durch welches die Kugeln 15 in umfänglicher Richtung auf einem vorgesehenen Abstand zueinander gehalten werden.

Der untere Flansch 3 umgreift den oberen Flansch 7 an dessen äußerem Rand 23 mit einem Überlappungsbereich b, wodurch bei Belastung an der Dreheinheit zwischen den Befestigungsabschnitten 16 und 17 der äußere Bereich mit dem äußeren Rand 2 nicht auffedern kann, sondern sich die Flanschbereiche ineinander "verkrallen".

Dadurch wird eine besonders stabile Dreheinheit geschaffen, die vergleichsweise hohen Belastungen standhält, die auf die Bohrungen 5 und 6 z. B. durch Einschraubstifte oder dergleichen von außen liegenden Strukturen auf die Dreheinheit 1 ausgeübt werden.

### Bezugszeichenliste:

- 1: Dreheinheit
- 2: äußerer Rand
- 3: unterer Flansch
- 4: Umfangswand
- 5: Bohrung
- 6: Bohrung
- 7: oberer Flansch
- 8: äußerer Bereich
- 9: Umgreifungselement
- 10: Flanschgrundplatte
- 11: Einstecklasche
- 11a: überstehender Bereich
- 12: Einstecköffnung
- 13: Rille
- 14: Rille
- 14a: Kugellagerbahn
- 15: Kugel
- 15a: Kugellageranordnung
- 16: Befestigungsabschnitt
- 17: Befestigungsabschnitt
- 18: Kugellageranordnung
- 19: Rille
- 20: Rille
- 21: Kugel
- 22: Käfig
- 23: äußerer Rand
- 24: Kugellagerbahn

## Patentansprüche

1. Dreheinheit (1) für einen Fahrzeugsitz, bestehend aus einem in Einbaulage unten liegenden ersten Flanschelement (3) und einem auf dem unten liegenden Flanschelement (3) drehbar angeordneten zweiten Flanschelement (7), wobei zwischen dem ersten und dem zweiten Flanschelement eine erste und zweite kreisförmige Wälzkörperanordnung mit Wälzkörperbahnen (14a, 24) mit unterschiedlichen Bahndurchmessern vorgesehen ist, um die Flanschelemente zueinander drehbar zu lagern, **dadurch gekennzeichnet, dass** eine erste radial außen liegende Wälzkörperbahn (14a) dadurch definiert ist, dass ein Flanschelement das andere Flanschelement um dessen äußeren Rand umgreift und überdeckt, sodass in einem Überdeckungsbereich (b) eine Wälzkörperbahn entsteht, wobei Befestigungsorgane (5, 6) für die Anbringung an ein Fahrzeugsitzgestell radial innen liegend in Bezug auf die äußere Wälzkörperbahn (14a) an den Flanschelementen (3, 7) vorgesehen sind.

2. Dreheinheit nach Anspruch 1, **dadurch gekennzeichnet, dass** zur Ausbildung der ersten Wälzkörperbahn im ersten und/oder zweiten Flanschelement eine kreisförmige Rille ausgebildet ist.

3. Dreheinheit nach einem der vorhergehenden Ansprüche, **dadurch gekennzeichnet, dass** eine zweite radial innen liegende Wälzkörperbahn zwischen den Flanschelementen ausgebildet ist, wobei die Flanschelemente sich in diesem Bereich überdecken.

4. Dreheinheit nach einem der vorhergehenden Ansprüche, **dadurch gekennzeichnet, dass** zur Ausbildung der zweiten Wälzkörperbahn (24) im ersten und/oder zweiten Flanschelement eine Rille ausgebildet ist.

5. Dreheinheit nach einem der vorgenannten Ansprüche, **dadurch gekennzeichnet, dass** die erste radial außen liegende Wälzkörperbahn (14a) auf dem zweiten Flanschelement (7) ausgebildet ist, wobei das erste unten liegende Flanschelement (3) das zweite Flanschelement (7) im Bereich der ersten Wälzkörperbahn (14a) umgreift und überdeckt.

6. Dreheinheit nach einem der vorhergehenden Ansprüche, **dadurch gekennzeichnet, dass** das Flanschelement (3), welches das andere Flanschelement (7) an dessen radial äußeren Rand umgreift, mehrteilig, insbesondere zweiteilig ist.

7. Dreheinheit nach einem der vorhergehenden Ansprüche, **dadurch gekennzeichnet, dass** das Flanschelement (3), welches das andere Flanschelement (7) an dessen radial äußeren Rand (23) umgreift, ein separates, insbesondere ringförmiges, das andere Flanschelement umgreifendes Bauteil (9) aufweist, das mit dem verbleibenden Flanschelement (10) fest verbunden ist.

8. Dreheinheit nach einem der vorhergehenden Ansprüche, **dadurch gekennzeichnet, dass** das umgreifende Bauteil (9) mit dem verbleibenden Flanschelement (10) auf einer Ebene des verbleibenden Flanschelements (10) fest verbunden ist.

9. Dreheinheit nach einem der vorhergehenden Ansprüche, **dadurch gekennzeichnet, dass** das umgreifende Bauteil (9) in das verbleibende Flanschelement (10) eingesteckt ist.

10. Dreheinheit nach einem der vorhergehenden Ansprüche, **dadurch gekennzeichnet, dass** das erste und/oder zweite Flanschelement ein Blechelement ist.

11. Fahrzeugsitzgestell mit einer Dreheinheit (1) nach einem der vorhergehenden Ansprüche.

12. Fahrzeugsitz mit einer Dreheinheit (1) nach einem der vorhergehenden Ansprüche 1 bis 10.

## Claims

1. Rotary unit (1) for an automobile seat, consisting of a first flange element (3) lying at the bottom in the installation position and a second flange element (7) arranged rotatably on the underlying flange element (3), wherein between the first and the second flange elements a first and second circular rolling body arrangement is provided with rolling element tracks (14a, 24) having different track diameters, in order to mount the flange elements rotatably relative to one another, **characterised in that** a first radial outer rolling element track (14a) is defined **in that** one flange element encompasses and overlaps the other flange element around its outer edge, so that a rolling element track is formed in an overlapping area (b), wherein securing elements (5, 6) are provided for attachment to an vehicle seat frame lying radially inside with respect to the outer rolling element track (14a) on the flange elements (3, 7).

2. Rotary unit according to claim 1, **characterised in that** a circular groove is formed to form the first rolling element track in the first and/or second flange element.

3. Rotary unit according to any of the preceding claims, **characterised in that** a second radially inner rolling element track is formed between the flange elements, wherein the flange elements overlap in this area.

4. Rotary unit according to any of the preceding claims, **characterised in that** a groove is formed to form the second rolling element track (24) in the first and/or second flange element.

5. Rotary unit according to any of the preceding claims, **characterised in that** the first radial outer rolling element track (14a) is formed on the second flange element (7), wherein the first underlying flange element (3) encompasses and overlaps the second flange element (7) in the area of the first rolling element track (14a).

6. Rotary unit according to any of the preceding claims, **characterised in that** the flange element (3), which encompasses the other flange element (7) on its radial outer edge, is made of multiple parts, in particular two parts.

7. Rotary unit according to any of the preceding claims, **characterised in that** the flange element (3), which encompasses the other flange element (7) on its radial outer edge (23), comprises a separate, in particular annular component (9) encompassing the other flange element, which component is securely connected to the remaining flange element (10).

8. Rotary unit according to any of the preceding claims, **characterised in that** the encompassing component (9) is securely connected to the remaining flange element (10) on a plane of the remaining flange element (10).

9. Rotary unit according to any of the preceding claims, **characterised in that** the encompassing component (9) is inserted into the remaining flange element (10).

10. Rotary unit according to any of the preceding claims, **characterised in that** the first and/or second flange element is a sheet metal element.

11. Vehicle seat frame with a rotary unit (1) according to any of the preceding claims.

12. Vehicle seat with a rotary unit (1) according to any of the preceding claims 1 to 10.

## Revendications

1. Unité rotative (1) pour un siège de véhicule, composé d'un premier élément de bride (3) situé en bas en position de montage et d'un second élément de bride (7) disposé rotatif sur l'élément de bride (3) situé en bas, un premier et un second arrangement circulaire d'éléments de roulement avec des pistes de roulement (14a, 24) de diamètres différents étant prévus entre le premier et le second élément de bride afin de loger les éléments de bride rotatifs l'un par rapport à l'autre, **caractérisé en ce qu'**une première piste de roulement (14a) située radialement à l'extérieur est définie par le fait qu'un élément de bride entoure et recouvre l'autre élément de bride autour de son bord extérieur, de sorte qu'une piste de roulement est formée dans une zone de chevauchement (b), des organes de fixation (5, 6) étant prévus sur les éléments de bride (3, 7), radialement à l'intérieur par rapport à la piste de roulement extérieure (14a), pour la fixation à un cadre de siège de véhicule.

2. Unité rotative selon la revendication 1, **caractérisée en ce qu'**une rainure circulaire est formée dans le premier et/ou le second élément de bride pour former la première piste de roulement.

3. Unité rotative selon l'une des revendications précédentes, **caractérisée en ce qu'**une seconde piste de roulement située radialement à l'intérieur est formée entre les éléments de bride, les éléments de bride se chevauchant dans cette zone.

4. Unité de rotation selon l'une des revendications précédentes, **caractérisée en ce qu'**une rainure est formée dans le premier et/ou le second élément de bride pour former la seconde piste de roulement (24).

5. Unité de rotation selon l'une des revendications précédentes, **caractérisée en ce que** la première piste de roulement (14a) située radialement à l'extérieur est formée sur le second élément de bride (7), le premier élément de bride (3) situé en bas entourant et recouvrant le second élément de bride (7) dans la zone de la première piste de roulement (14a).

6. Unité rotative selon l'une des revendications précédentes, **caractérisée en ce que** l'élément de bride (3) qui entoure l'autre élément de bride (7) au niveau de son bord radialement extérieur est en plusieurs parties, en particulier en deux parties.

7. Unité de rotation selon l'une des revendications précédentes, **caractérisée en ce que** l'élément de bride (3) qui entoure l'autre élément de bride (7) au niveau de son bord radialement extérieur (23) présente un composant séparé (9), en particulier annulaire, qui entoure l'autre élément de bride et qui est relié fermement à l'élément de bride restant (10).

8. Unité rotative selon l'une des revendications précédentes, **caractérisée en ce que** le composant entourant (9) est relié fermement à l'élément de bride restant (10) sur un plan de l'élément de bride restant (10).

9. Unité rotative selon l'une des revendications précédentes, **caractérisée en ce que** l'élément entourant (9) est inséré dans l'élément de bride restant (10).

10. Unité rotative selon l'une des revendications précédentes, **caractérisée en ce que** le premier et/ou le second élément de bride est un élément en tôle.

11. Cadre de siège de véhicule avec une unité rotative (1) selon l'une des revendications précédentes.

12. Siège de véhicule avec une unité rotative (1) selon l'une des revendications précédentes 1 à 10.
